# EUROPEAN PATENT APPLICATION

(11) **EP 4 671 669 A1**
(43) Date of publication of application: **31.12.2025**
(21) Application number: 24221667.9
(22) Date of filing: 19.12.2024
(51) Int. Cl.: F41A 21/30

(54) **FIREARM SUPPRESSOR AND METHOD OF MANUFACTURING**

(30) Priority: 26.06.2024 US 202463664658 P
(71) Applicant: B&T AG, 3608 Thun (CH); B&T USA, LLC, Tampa, Florida 33610 (US)
(72) Inventor: BRÜGGER, Karl, 3608 Thun (CH); SULLIVAN, Sean, 21054 Gambrills (US)
(74) Representative: Patentsmith SA

(57) **Abstract**

Firearm suppressor (10) comprising:
- a tube (100) having a first end (104) and a second end (106), said first end being adapted to be coupled to a firearm, preferably via a mounting system;
- one or more baffles (200) situated within said tube;
wherein one or more of said baffles (200) is a curved-sided hexagram baffle (200), comprising:
- a top surface (202a) including a first portion (204a) having six rounded arms or proj ections (206a) fixedly coupled to a generally conical second portion (208a), said top surface (202a) having a convex surface facing the first end (104);
- a bottom surface (202b) having a first portion (204b) having six rounded valleys (207) fixedly coupled to the generally conical second portion (208b), said bottom surface (202b) having a concave surface facing the second end (106);
- a two-step, flat-top surface (212) facing said first end (104), the flat-top surface (212) having one step (214) higher or longer than a second step (216), the bottom surface (202b) likewise having a concave, two-step surface (209) that mimics said flat-top surface (212).

## Description

### TECHNICAL FIELD

The present invention relates to a particular shape of baffle used in a firearm suppressor and the method of manufacturing the suppressor. In its preferred form, the firearm suppressor is 3D printed with one or more baffles that have a unique, waveform shape, similar to a 6-pointed star or a flapjack octopus (with only six tentacles). More generally, the instant invention relates to a 3D printed, universal firearm suppressor that may be mounted to various firearms, and more particularly to a suppressor having uniquely shaped baffles for dissipating the gasses that accompany a projectile when discharged from the firearm.

### BACKGROUND

A silencer or suppressor works by containing and slowly releasing the gas and pressure of a projectile or bullet fired from a firearm. Silencers and/or suppressors are necessary to dampen the sound and reduce the flash created when the firearm is fired. Suppressors are available in many different sizes and shapes. Typically, there are four classes of suppressors: reactive, dissipative, absorptive, and dispersive/diffusive. A reactive silence uses geometry rather than sound absorbing materials to reduce noise from a firearm. An absorptive silencer, on the other hand, uses sound absorbing materials. With dissipative suppressors, flow resistance is utilized to reduce the velocity of the gasses. Finally, dispersive/diffusive suppressors diffuse high-velocity turbulent gas to a lower velocity, less blustery flow, which allows for less sound to be generated as the firearm is fired. In various suppressors, more than one type of suppression is used. Some silencers have even used spark arresting, water separation, heat recovery, or filtering to achieve the desired results.

Silencers may be attached to the muzzle of a firearm prior to firing the firearm. Ultimately, each type of silencer discussed above dampens sound by trapping or slowing the expanding gasses produced when the bullet or projectile is fired. However, contrary to popular belief, a silencer does not entirely suppress the sound of the firearm. Rather, it merely reduces the decibels ordinarily produced by a particular firearm.

Traditional suppressors known in the art use a variety of baffles that are separately formed and then filed into a suppressor tube and retained using some sort of end cap. Traditional style suppressor baffles include cone-shaped, M-shaped, K-shaped, and Omega-shaped baffles (Q). However, the suppressors with these baffles fail easily, making it costly to replace, and do not dampen the sound as much as a user may want. In fact, gun and suppressor manufacturers continue to alter and experiment with the shape of the suppressor and its internal components to improve hearing protection, reduce noise pollution, and create suppressors that do not fail during high intensity use situations resulting in additional costs for the consumer.

Thus, a need exists for a firearm suppressor that has the ability better reduce the back pressure when compared to suppressors having traditional style baffles, increase the surface area for gas disruption to further dampen the sound emitted from the firearm, manufacture a suppressor that is sized and shaped so that it can adequately handle the gas disruption so that the suppressor will not fail after only limited use, and easily mass produce the suppressor using 3D printing thereby driving down the cost for the consumer.

### SUMMARY OF THE INVENTION

This aim is at least partially achieved by a firearm suppressor as defined in independent claim 1. This firearm suppressor comprises a tube, i.e. an elongated housing, having a first end and a second end, said first end being adapted to be coupled to a firearm, preferably via a mounting system of any convenient, and one or more baffles situated within said tube.

According to the invention, one or more of said baffles is a curved-sided hexagram baffle, comprising:

- a top surface including a first portion having six rounded arms or projections fixedly coupled to a generally conical second portion, said top surface having a convex surface facing the first end, i.e. facing the firearm when the suppressor is in its service position mounted thereupon;

- a bottom surface having a first portion having six rounded valleys fixedly coupled to the generally conical second portion, said bottom surface having a concave surface facing the second end, i.e. facing away from the firearm when the suppressor is in its service position mounted thereupon. Although six rounded arms or projections and six rounded valleys are defined here, other numbers are obviously equivalent thereto, preferably between four and eight;

- a two-step, flat-top surface facing said first end, the flat-top surface having one step higher or longer than a second step, i.e. one step is closer to said first end than the other step is, the bottom surface likewise having a concave, two-step surface that mimics said flat-top surface, i.e. is of complementary form thereto.

The shape of the baffles as defined above, when compared to traditional baffles such as cone, M, K, and Omega baffles creates an increased surface area for gas disruption, further dampening the sound emitted from the firearm, and may help to reduce back pressure.

This aim is also achieved by a firearm suppressor as defined in independent claim 2. This firearm suppressor comprises a tube, i.e. an elongated housing, having a first end and a second end, said first end being adapted to be coupled to a firearm, preferably via a mounting system of any convenient type, and one or more baffles situated within said tube.

According to the invention, one or more of said baffles comprises five fully-rounded arms and two half-arms, although other numbers of arms and half-arms are obviously equivalent thereto. Said one or more baffle(s) comprises:
- a top surface having a first portion with arms fixedly coupled to a generally conical second portion, said top surface having a convex surface facing the first end, i.e. towards the firearm when the suppressor is in its service position mounted thereupon, said arms defining valleys therebetween, said arms and said valleys being twisted clockwise around the second portion, although anticlockwise twisting is obviously equivalent thereto;
- a bottom surface comprising a cone having a concave surface facing the second end, i.e. towards the open end of the suppressor when this latter is in its service position mounted on a firearm. In particular, said bottom surface can comprise only said cone;
- a two-step flat-top surface facing the first end, the flat-top surface having one step higher or longer, i.e. closer to the first end, than a second step.

As before, the shape of the baffles as defined above, when compared to traditional baffles such as cone, M, K, and Omega baffles, creates an increased surface area for gas disruption, further dampening the sound emitted from the firearm, and may help to reduce back pressure.

Advantageously, said first end and/or said second end may include one or more struts or other additional structural pieces. These increase the rigidity of the suppressor and strengthen it without adding too much additional weight, particularly when it is produced by 3D printing.

Advantageously, a cone-shaped blast baffle may be located proximate the first end of the tube, said blast baffle preferably creating a full circle at its aperture proximate the first end. This blast baffle may comprise a scallop, said scallop being adapted to create a jet or circulation of gas adapted to cause a significant disruption in gas flow. More particularly, said scallop may be formed as a notch or cutout on an edge of said baffle and adapted to help direct and control a flow of gases as they pass through said suppressor, and is preferably located on a downstream side of said blast baffle. This scallop creates a jet or circulation of gas which causes significant disruption in gas flow, ultimately improving the firearm suppressor's performance.

Advantageously, the suppressor of the invention may be manufactured by 3D printing, for instance by selective laser sintering or similar.

### BRIEF DESCRIPTION OF THE DRAWINGS

The previous summary and the following detailed descriptions are to be read in view of the drawings, which illustrate some, but not all, embodiments and features as briefly described below. The summary and detailed descriptions, however, are not limited to only those embodiments and features explicitly illustrated.
FIG. 1 is a perspective view of a front or first end of a firearm suppressor, in accordance with an embodiment of the present invention.
FIG. 2 is perspective view of a rear or second end of the firearm suppressor of FIG. 1, as viewed from the second end.
FIG. 3 is a first side view of the firearm suppressor of FIG. 1.
FIG. 4 is a second side view of the firearm suppressor of FIG. 1.
FIG. 5 is a front view of the second end of the firearm suppressor of FIG. 1.
FIG. 6 is a front view of the first end of the firearm suppressor of FIG. 1.
FIG. 7 is a partial perspective view of the second end shown in FIG. 5 in accordance with an example embodiment of the firearm suppressor of FIG. 1.
FIG. 8 is a partial perspective view of the first end shown in FIG. 6 in accordance with an example embodiment of the firearm suppressor of FIG. 1.
FIG. 9 is a sectional view of the firearm suppressor of FIG. 1.
FIG. 10 is a sectional, perspective view of the firearm suppressor of FIG. 1.
FIG. 11 is a sectional, perspective view of the firearm suppressor of FIG. 1.
FIG. 12 is a partial perspective view from the second end of the firearm suppressor of FIG. 1 with an exemplary baffle shown.
FIG. 13 is a partial perspective view from the first end of the firearm suppressor of FIG. 1 with an exemplary baffle shown.
FIG. 14 is a partial sectional view of the second end of the firearm suppressor of FIG. 1 with an exemplary expansion/compression tube having one or more chambers and a center chamber for venting gas back into the firearm suppressor to mitigate muzzle flash and sound.
FIG. 15 is a partial sectional view of the first end of the firearm suppressor of FIG. 1 with an exemplary cone-shaped baffle having a scallop for venting gas back into the firearm suppressor to mitigate muzzle flash and sound while the cone-shaped baffle allows the firearm suppressor to maintain its integrity so that it may last longer.
FIG. 16 is a perspective view of first surface of a baffle that may be coupled to the firearm suppressor of FIG. 1, the baffle having a unique shape.
FIG. 17 is a perspective view of an opposing surface of the baffle of FIG. 16 for coupling to the firearm suppressor of FIG. 1.
FIG. 18 is a front view of the first surface of the baffle, as shown in FIG. 16.
FIG. 19 is a rear view of the opposing surface of the baffle, as shown in FIGS. 16 17, and 18.
FIG. 20 is a first side view of the baffle shown in FIG. 16 illustrating the higher step portion of the baffle.
FIG. 21 is a second side view of the baffle shown in FIG. 16 illustrating the lower step portion of the baffle as compared to the higher step portion of FIG. 20.
FIG. 22 is a third side view of the baffle shown in FIG. 16 illustrating the lower step portion of the baffle as compared to the higher step portion of FIG. 20.
FIG. 23, similarly, is a fourth side view of the baffle shown in FIG. 16 illustrating the lower step portion of the baffle as compared to the higher step portion of FIG. 20.
FIG. 24 is a partial sectional view of the second end of the firearm suppressor of FIG. 1 with greater details illustrating one or more chambers for venting gas, as shown in FIG. 14.
FIG. 25 is a front view of the baffle illustrating various angles, measurements, and thread patterns for the one or more baffles for use within the firearm suppressor of FIG. 1.
FIG. 26 is an example embodiment of a firearm suppressor of FIG. 1 coupled to a firearm.
FIG. 27 illustrates a partial sectional view of the firearm suppressor of FIG. 1 with the one or more baffles arranged in a series within a relatively longer tube.
FIG. 28 illustrates a partial sectional view of the firearm suppressor of FIG. 1 with the one or more baffles arranged in a series within a relatively shorter tube.
FIG. 29 illustrates a partial sectional view of the firearm suppressor of FIG. 1 with the uniquely shaped baffles and no cone-shaped baffle.
FIG. 30, similarly, illustrates a partial sectional view of the firearm suppressor of FIG. 1 with a single uniquely shaped baffle.
FIG. 31 illustrates a partial sectional view of the second end of the firearm suppressor of FIG. 1.
FIG. 32 illustrates a first surface of an alternate embodiment of a uniquely shaped baffle that may be incorporated into the firearm suppressor of FIG. 1.
FIG. 33 illustrates an opposing surface of the alternate embodiment of a uniquely shaped baffle as shown in FIG. 32 that may be incorporated into the firearm suppressor of FIG. 1.
FIG. 34 is a front view of the first surface of the alternate embodiment baffle, as shown in FIG. 32.
FIG. 35 is a rear view of the opposing surface of the alternate embodiment baffle, as shown in FIGS. 33.
FIG. 36 is a side view of the alternate embodiment baffle as shown in FIGS. 32-35 with the outlet portion shown at the top of the baffle.
FIG. 37 is a side view of the alternate embodiment baffle as shown in FIGS. 32-36 with the inlet portion shown at the top of the baffle.
FIG. 38 is a side view of the alternate embodiment baffle as shown in FIGS. 32-37 with the outlet portion shown at the right of the baffle.
FIG. 39 is a side view of the alternate embodiment baffle as shown in FIGS. 32-38 with the inlet portion shown at the right of the baffle.
FIG. 40 is an exemplary design of the firearm suppressor of FIG. 1.
FIG. 41 illustrates sectional views of suppressors with different baffle designs.

### DETAILED DESCRIPTIONS

These descriptions are presented with sufficient details to provide an understanding of one or more particular embodiments of broader inventive subject matters. These descriptions expound upon and exemplify particular features of those particular embodiments without limiting the inventive subject matters to the explicitly described embodiments and features. Considerations in view of these descriptions will likely give rise to additional and similar embodiments and features without departing from the scope of the inventive subject matters. Although steps may be expressly described or implied relating to features of processes or methods, no implication is made of any particular order or sequence among such expressed or implied steps unless an order or sequence is explicitly stated.

Any dimensions expressed or implied in the drawings and these descriptions are provided for exemplary purposes. Thus, not all embodiments within the scope of the drawings and these descriptions are made according to such exemplary dimensions. The drawings are not made necessarily to scale. Thus, not all embodiments within the scope of the drawings and these descriptions are made according to the apparent scale of the drawings with regard to relative dimensions in the drawings. However, for each drawing, at least one embodiment is made according to the apparent relative scale of the drawing.

Like reference numbers used throughout the drawings depict like or similar elements. Unless described or implied as exclusive alternatives, features throughout the drawings and descriptions should be taken as cumulative, such that features expressly associated with some particular embodiments can be combined with other embodiments.

Unless defined otherwise, technical and scientific terms used herein have the same meaning as commonly understood to one of ordinary skill in the art to which the presently disclosed subject matter pertains. Although any methods, devices, and materials similar or equivalent to those described herein can be used in the practice or testing of the presently disclosed subject matter, representative methods, devices, and materials are now described.

Following long-standing patent law convention, the terms "a," "an," and "the" refer to "one or more" when used in the subject specification, including the claims. Unless indicated to the contrary, the numerical parameters set forth in the instant specification and attached claims are approximations that can vary depending upon the desired properties sought to be obtained within the scope of these descriptions. As used herein, the term "about," when referring to a value or to an amount of mass, weight, time, volume, concentration, and/or percentage can encompass variations of, in some embodiments +/-20%, in some embodiments +/-10%, in some embodiments +/-5%, in some embodiments +/-1%, in some embodiments +/-0.5%, and in some embodiments +/-0. 1%, from the specified amount, as such variations are within the scope of these descriptions.

Referring to the present invention, various improvements in the art have been made by the current concept. Thus, the new concept reduces noise pollution, protects a user's ears, improves accuracy, provides a tactical advantage, and in some cases, aids in legal compliance where suppressors are mandated or encouraged by law, especially in densely populated areas or for specific types of hunting. Overall, the use of the suppressor is primarily to make shooting safer, more comfortable, and less disruptive to both the shooter and their surroundings.

For example, the shape of the new baffles when compared to traditional baffles (i.e., cone, M, K, and Omega) creates an increased surface area for gas disruption, further dampening the sound emitted from the firearm, and may contribute to reducing backpressure. Similarly, the various angles of the baffles increase the surface area for disrupting the gasses at varying angles, also thereby increasing the dampening effects on the firearm sound. This protects a user's ears from the high decibel sounds produced by the firearm, especially when fired in confined spaces or fired repeatedly over time. This makes the use of a firearm safer for the proper user. Thus, overall, the baffle shape greatly increases sound reduction of any firearm it is mounted on or coupled to. Finally, by 3D printing the suppressor as a single unit, e.g. by one of the many known types of additive manufacturing such as, but not limited to, selective laser sintering, selective laser melting or similar from materials such as steels, aluminium, titanium, Inconel, ceramics, polymers, etc., mass production is easily accomplished driving down consumer cost, as well as creating a suppressor that is not fallible when compared to prior suppressors that are formed separately and assembled together either by the manufacturer or the user when cleaning the suppressor.

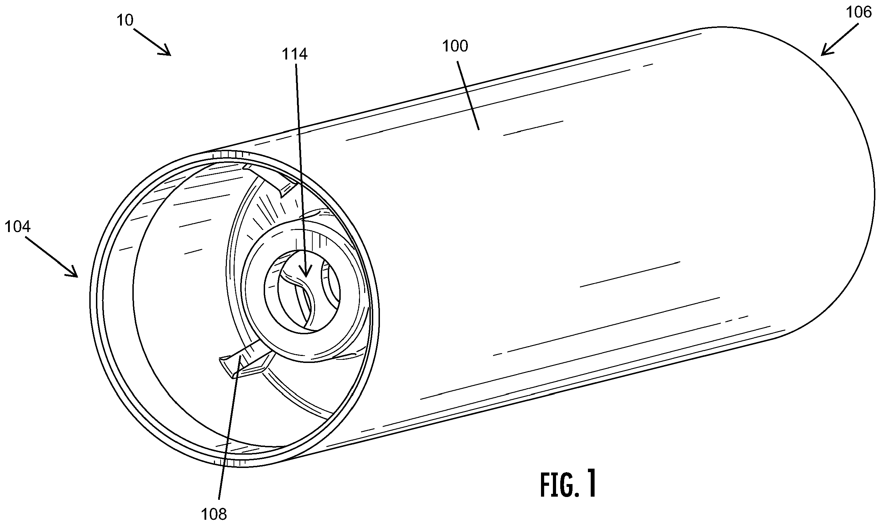

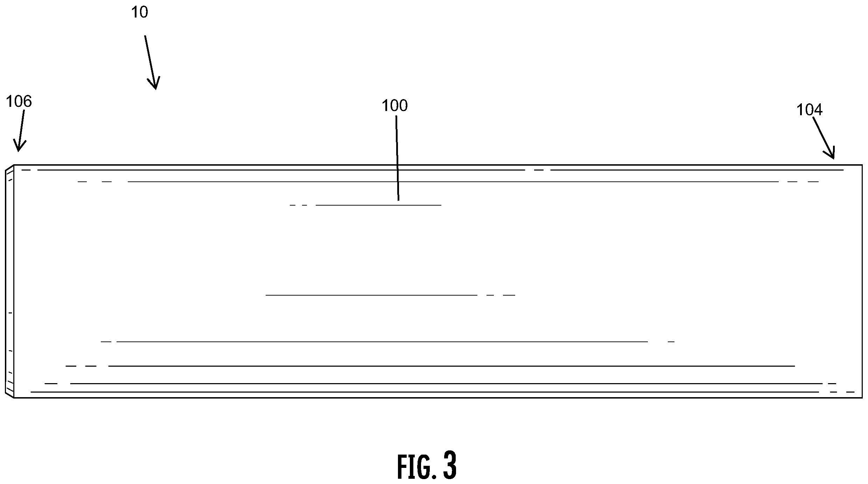

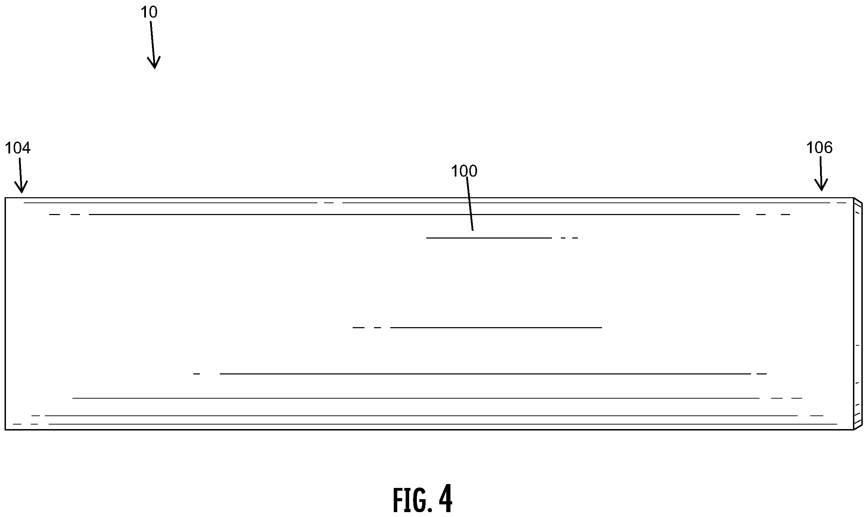

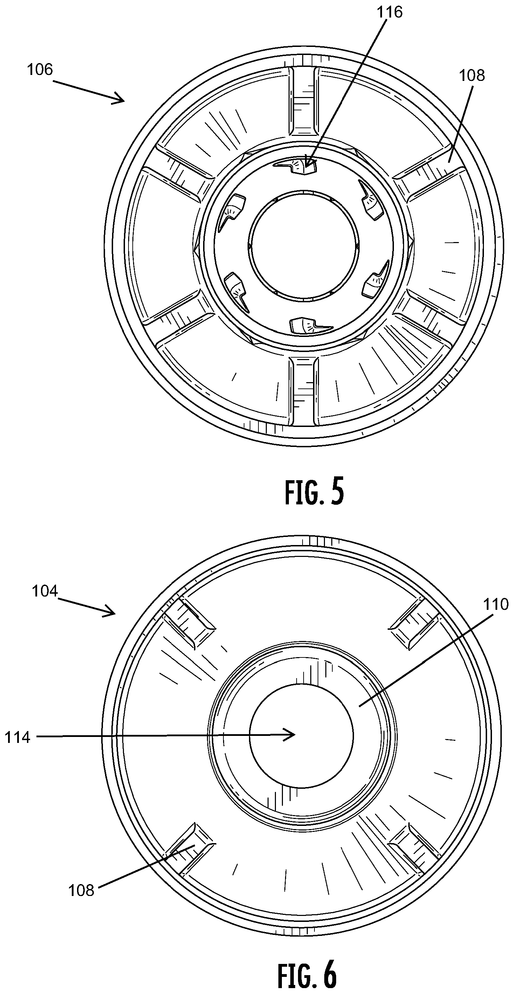

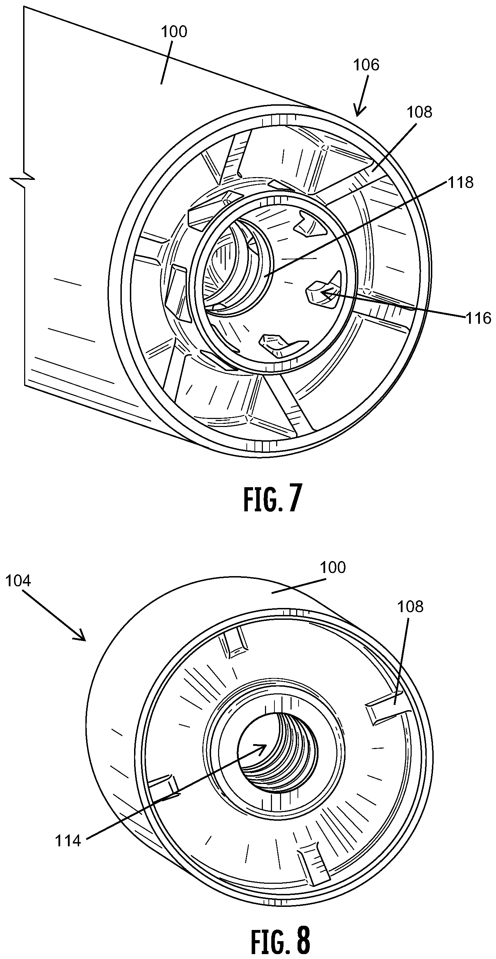

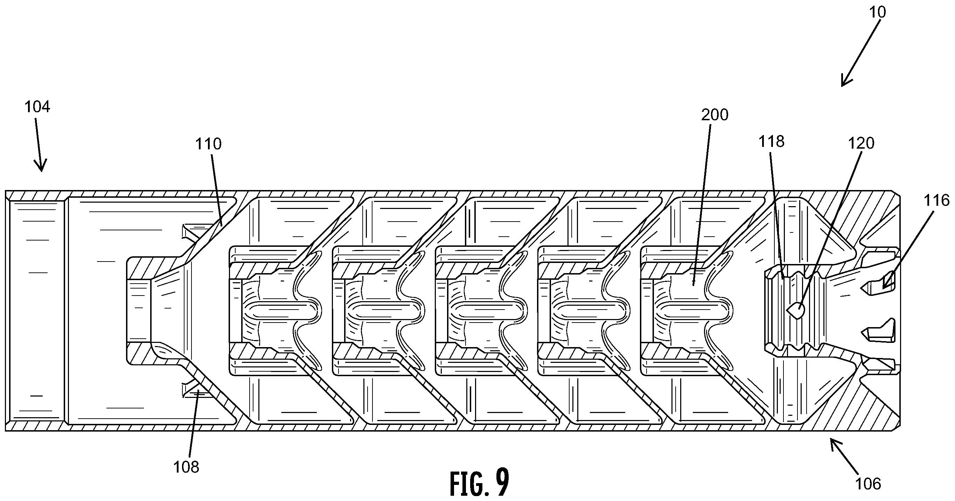

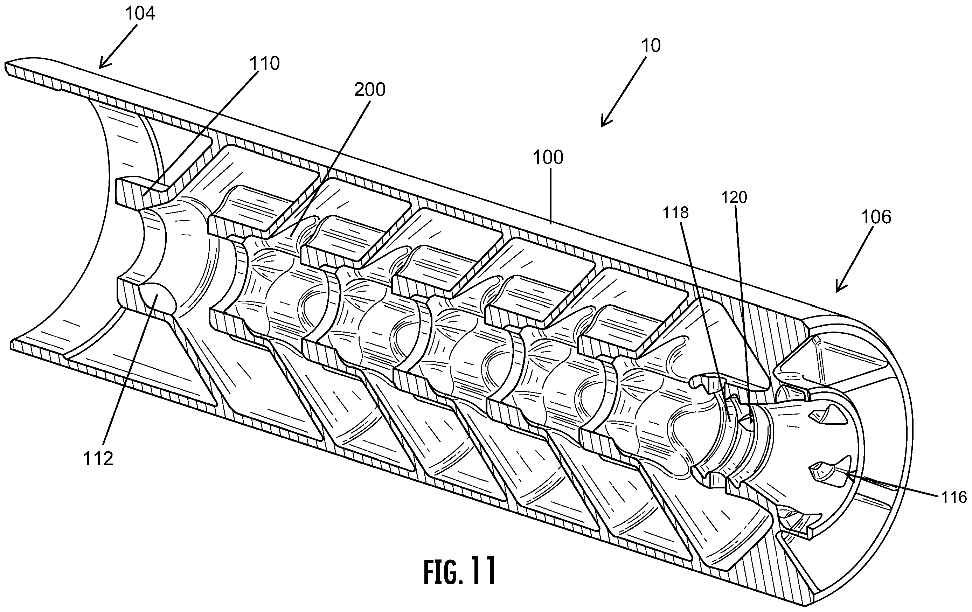

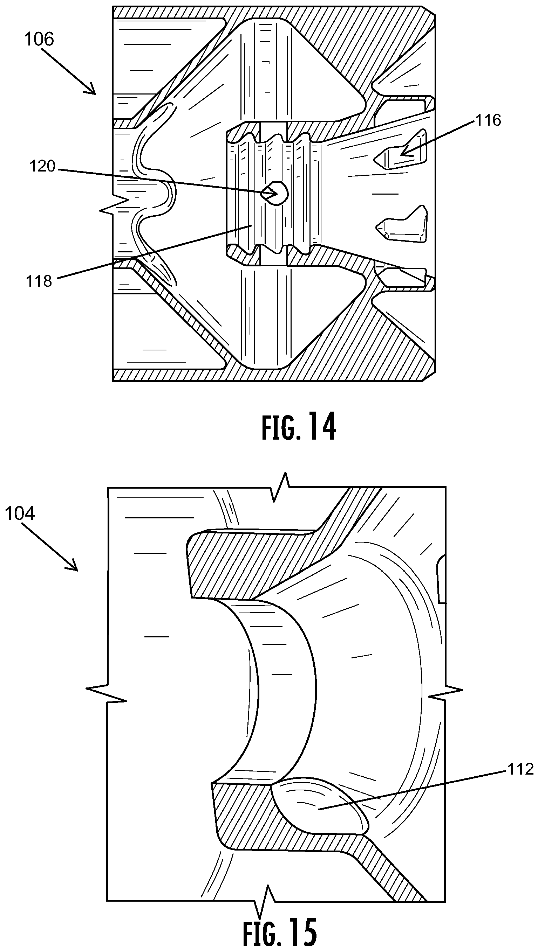

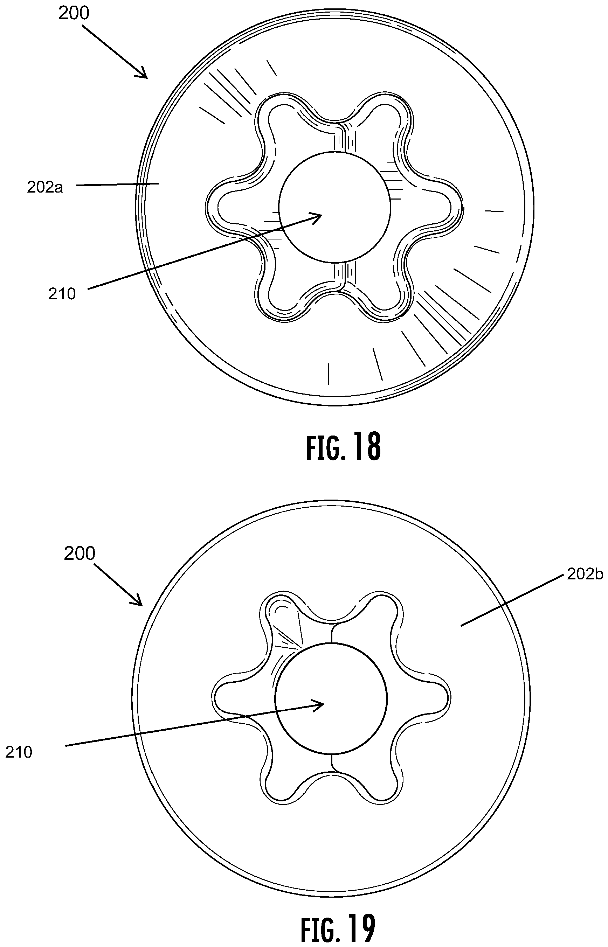

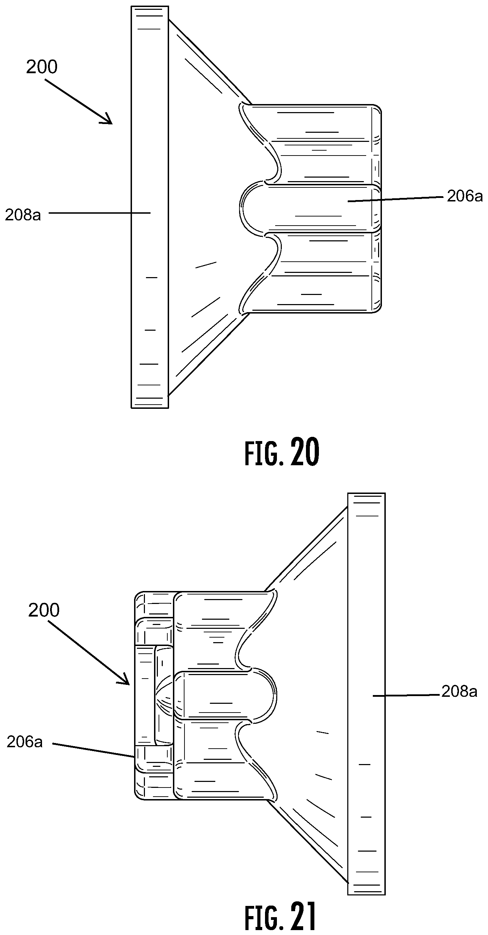

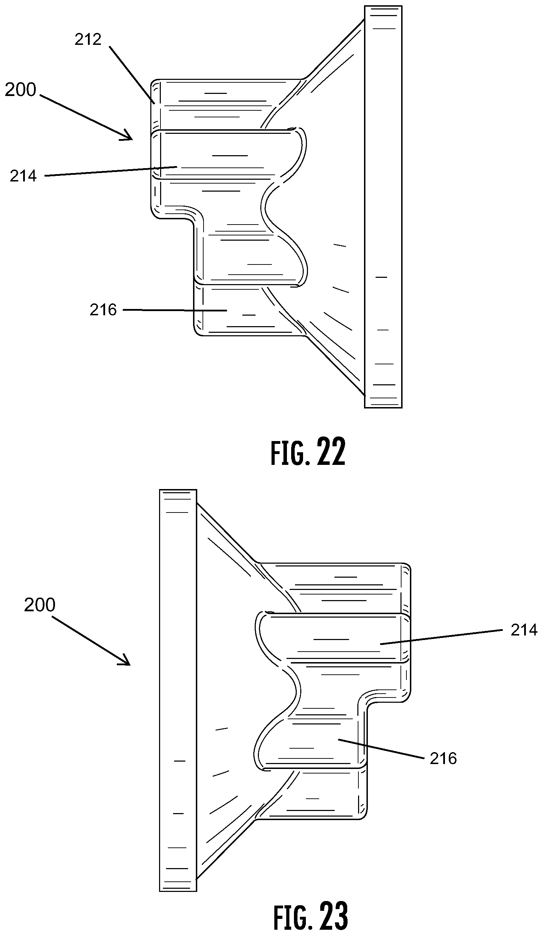

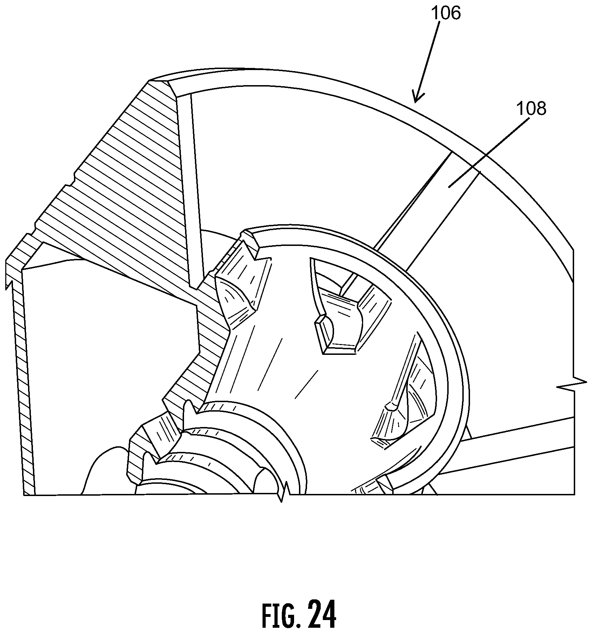

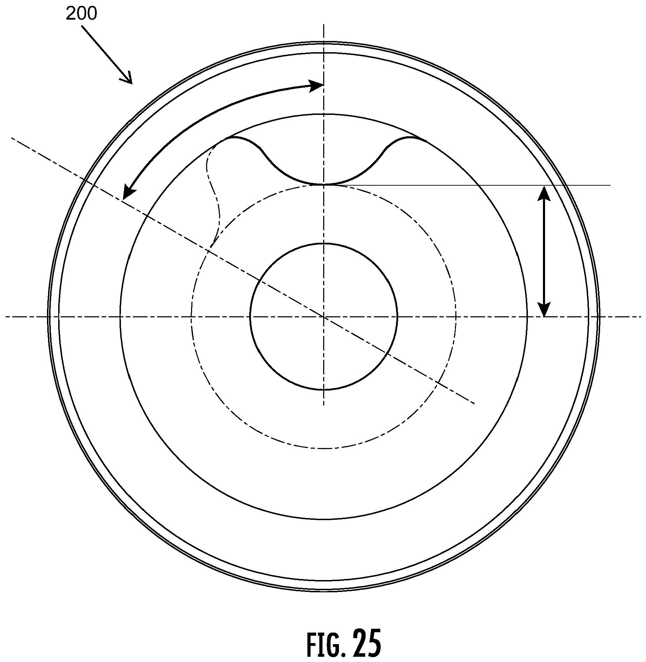

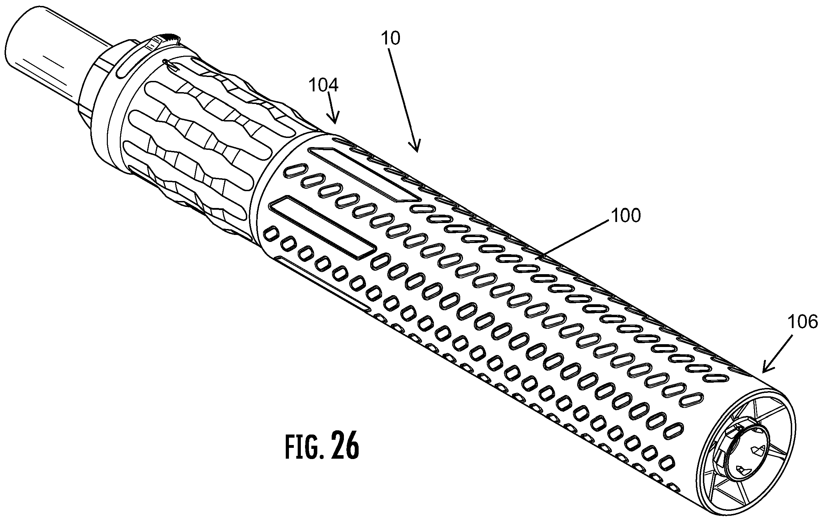

Referring now to FIGS. 1-26, a firearm suppressor 10 includes a tube or elongated housing 100, one or more baffles 200 within the tube, an inlet or first end 104, and an outlet or second end 106. In various embodiments, the first end 104 includes one or more optional struts 108 or other additional structural pieces to increase the rigidity of the suppressor 10 and strengthen it without adding too much additional weight to the suppressor because the firearm suppressor can be made with less material and thinner walls than any other design allows for. The struts 108 or structural supports are printed into the exit area and a blast baffle 110 to increase support to areas that critically fail during high intensity use situations. In some embodiments, a cone-shaped baffle or blast baffle 110 is located proximate the first end 104 of the tube or housing chamber 100. The blast baffle 110 is a conical baffle, creating a full circle at its aperture proximate the first end 104 of the firearm suppressor 10.

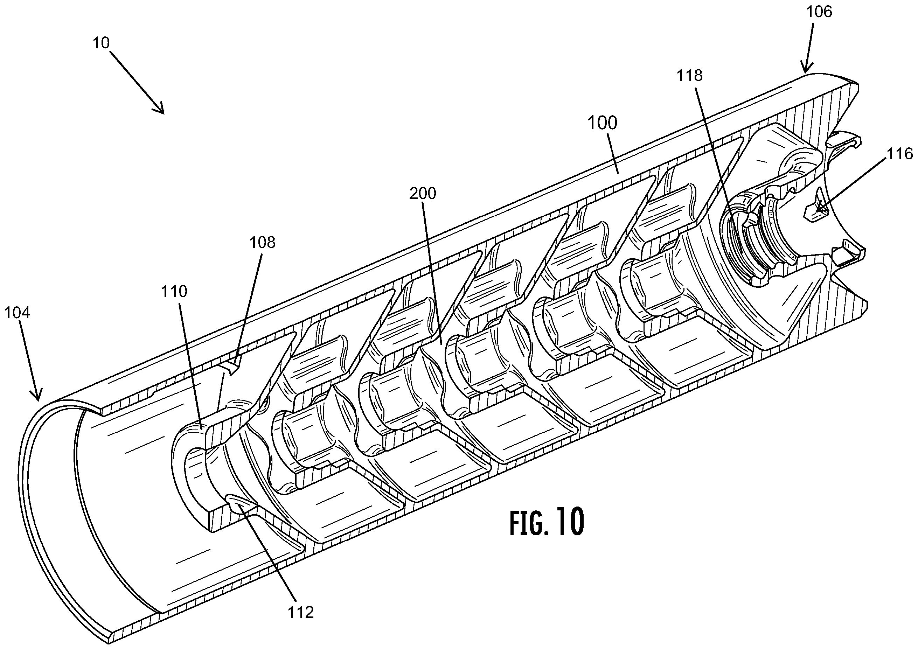

Various aspects and views of the first end 104 of the firearm suppressor 10 can be seen in FIGS. 1, 6, 8, 9-11, and 15. The blast baffle 110 has a unique feature 112 added to a single portion of the baffle, as shown in FIG. 10. In some embodiments, the unique but optional feature, also known as a scallop 112 (e.g., a notch or cutout on the edge of the baffle that helps direct and control the flow of gases as they pass through the suppressor) creates a jet or circulation of gas which causes significant disruption in gas flow, ultimately improving the firearm suppressor's performance. Additionally, by using a more standard cone style baffle 110, the front ring allows for significant wear improvement as it is the object to encounter the gas and projectile from the firearm. This allows for the suppressor to have a significantly longer lifespan than other suppressors on the market. At the center of the blast baffle 110 is a rounded aperture 114 that allows a bullet fired from the firearm to pass through the center of the firearm suppressor 10. In various embodiments, the aperture 114 may be threaded or have any other suitable textured or smooth surface that allows a bullet or other projectile, along with the gas that has built up pressure behind the bullet, to travel down and out of the firearm suppressor as it is forced out by the gas build up.

Although not shown, any suitable mounting system (i.e., direct thread, quick detach, fixed mount, passive locking, active locking, combination of passive and active locking, integral suppressor, and taper mount) may be used to couple the first end 104 of the firearm suppressor 10 to a firearm. In some embodiments, the firearm suppressor 10 is coupled using a quick attachment system.

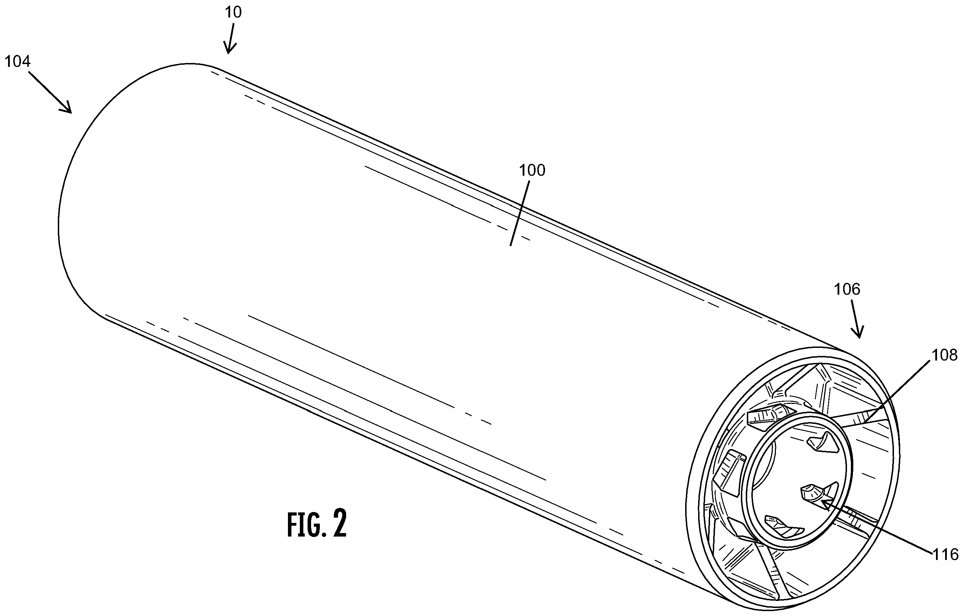

Referring to FIGS. 2, 5, 7, 9-11, and 14, at the opposite end of the firearm suppressor 10 from the first end 104, the second end 106 of the firearm suppressor 10 also includes one or more optional struts 108 that provide rigidity and structure to the suppressor. Similarly, the struts 108 help with areas that fail during high intensity use and keep the weight of the suppressor light because they are not formed from very much material. The second end 106 of the firearm suppressor 10 further includes one or more flash vents 116 that are in a circular series, which deflects gas straight, and then at a 90° angle, thereby further increasing travel and dissipation time of the gasses - which ultimately minimizes the sound that is audible from the firearm. The flash vents 116 further help push gas and visible light into an opposing 45° angle surface, which then redirects the gas and light forward for a final time. Thus, these vents minimize the perceived flash and sound coming out of the firearm and end of the firearm suppressor 106. In other words, the vents or ports change the direction of the gas at a right angle, and then direct it into the 45 degree strut and the outer wall. This shields the flash and noise from initial detection from someone observing from the side of the suppressor and directs it forwards, but is not essential in respect of the sound damping effect of the baffles 200, 300, as will become apparent below.

Intermediate the circular ring of flash vents 116 and the first end of the firearm suppressor 104, the second end 106 includes a rapid expansion/compression tube that opens and closes in a series of three (3) micro chambers 118. The center chamber is vented 120 back into the firearm suppressor 10. This configuration further mitigates the flash and adds one final circular gas disruption event as the hot gas prepares to exit the suppressor, but is not essential in respect of the sound damping effect of the baffles 200, 300, as will become apparent below.

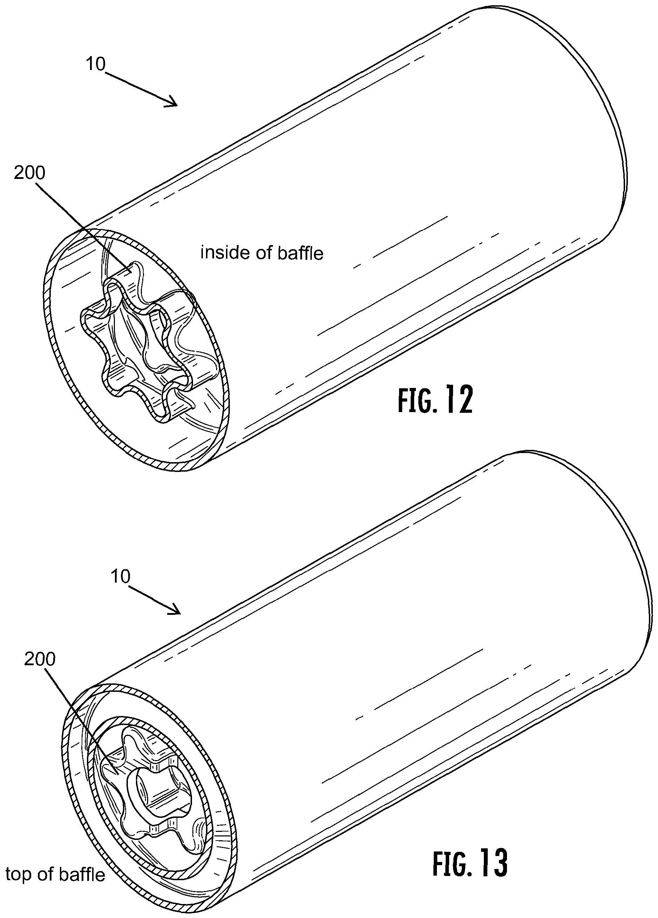

Referring now to FIGS. 12-13, 16-23, and 25, the firearm suppressor 10 includes one or more curved-sided hexagram baffles 200 in series within the suppressor housing 100. The hexagram baffles 200 may also be considered to vaguely resemble a flapjack octopus, if that octopus only had six (6) arms.

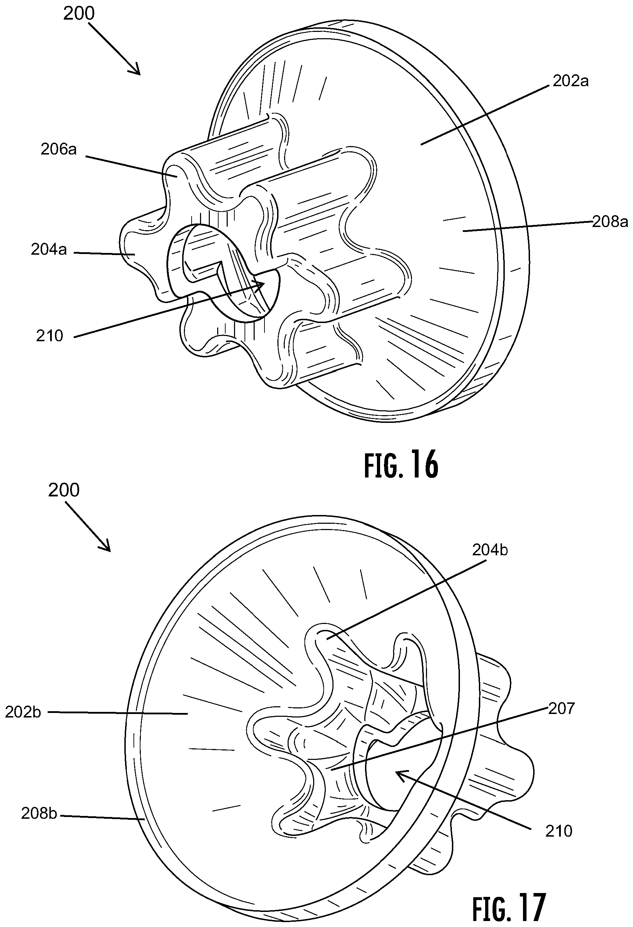

Referring more specifically to FIGS. 16-23, and describing a singular baffle as all of the following baffles are identical (although this does not have to be so since they may vary in terms of length, angle etc.), the hexagram baffle 200 includes a top surface 202a that faces the firearm and the first end 104 of the firearm suppressor 10, typically extending substantially perpendicular to the longitudinal axis of the firearm suppressor 10. The top surface 202a includes a first portion 204a having six (6) rounded arms or projections 206a fixedly coupled to a second portion 208a, which is generally conical - have a convex surface that faces the first end 104 of the firearm suppressor 10, as shown in FIG. 16. Conversely, the bottom surface 202b of the hexagram baffle 200 includes the opposite, having a first portion 204b having six (6) rounded valleys 207 fixedly coupled to the second portion 208b, which is conical having a concave surface that faces the second end 106 of the firearm suppressor 10, as shown in FIG. 17. However, other numbers of arms or projections and valleys are clearly equivalent to the six illustrated, suitable numbers typically lying in the four to eight region, with a preference for between five and seven.

As the arms 206a of the top surface 202a protrude outwardly toward the first end 104 of the firearm suppressor 10, they create a wave-like or flower-like design, curving in and out from the center bore 210 of the hexagram baffle 200. Simultaneously, the curved outward protrusions curving in and out from the center of the baffle 200 also include a two-step, flat top surface 212 that faces the first end 104, the surface 212 having one step 214 higher or longer than the second step 216, i.e. closer to the first end 104 and hence the firearm when the suppressor 10 is mounted thereupon. Just as the bottom surface 202b followed the same but opposite and concave configuration of the top surface 202a, the bottom surface 202b likewise has concave, two-step surface 209 that mimics the top surface, as discussed further below.

Returning to FIG. 16, because of the two-step top surface 212 splitting the hexagram baffle 200 into a top step 214 and a bottom step 216, the gas that forces the bullet out of the chamber hits the surfaces of these baffles 200 at varying times so that the gas is not pushed backwards like it would be were it hitting a circular surface as found in other firearm suppressors. Additionally, because the top surface 212 has such a large surface area for the gas to hit, each of the interferences or protrusions 206a slow the gas down and increase the performance of the muzzling of the sound. Thus, the gas hits the first step 214 first and then it goes down the second step 216 and the valleys 207 before it goes down along the top of the second portion 208a, hitting the cone structure before it is able to pass through the center bore 210, where it will encounter exactly the same style baffle 200 in series with the first, until it ultimately leaves the firearm suppressor 10 from the outlet at the second end 206 at a quieter and slower pace than that which it left the firearm. Because of the slowing of the gasses, the firearm suppressor 10 having the curved-sided hexagram baffles 200 is able to protect the user's ears, reduce noise pollution, improve the accuracy of the projectile, provide a tactile advantage to the user, and, in some cases, help the user comply with the law.

However, none of these improvements over the suppressors currently available would be possible without the use of 3D printing. The entire shape of the suppressor, including the curved-sided hexagram baffles 200 is only achievable because of the development of 3D printing. Using the proper angling and radiuses for the baffles so that the baffles and the firearm suppressor did not collapse like a house of cards, the entire firearm suppressor 10 is 3D printed by stacking each element on top of the other at an angle. Additionally, the use of 3D printing allows a manufacturer to make the firearm suppressor in a serial, mass production way, making it cost effective. Various variables went in to finding the perfect shape for the baffle. If the curves were too deep or the protrusions were too skinny, the firearm suppressor would fail or even collapse while printing. Because of the 3D printing the curved-sided hexagram baffle 200 has an optimized radius that allows the transition from vertical walls to large over hangs required to be able to produce the shape while also not collapsing during the 3D printing process. In manufacturing the firearm suppressor 10, the suppressor may have anywhere from 5-10 baffles 200, although smaller numbers are also possible in more compact suppressors 10. Additionally, the 3D printing makes the firearm suppressor less noisy because of the way the firearm suppressor 10 is printed, it creates a wall because it has to be 3D printed at an angle, so the angle inside reflects all the sound back into the sound test meter. Thus, by putting up a wall in front of the end of the firearm suppressor, the sound is reflected backward and therefore reduced. Although machining methods may be able to produce the shape, geometry, and closeness of the various elements of the presently disclosed firearm suppressor, it would take a considerable amount of time, meaning making fewer suppressors.

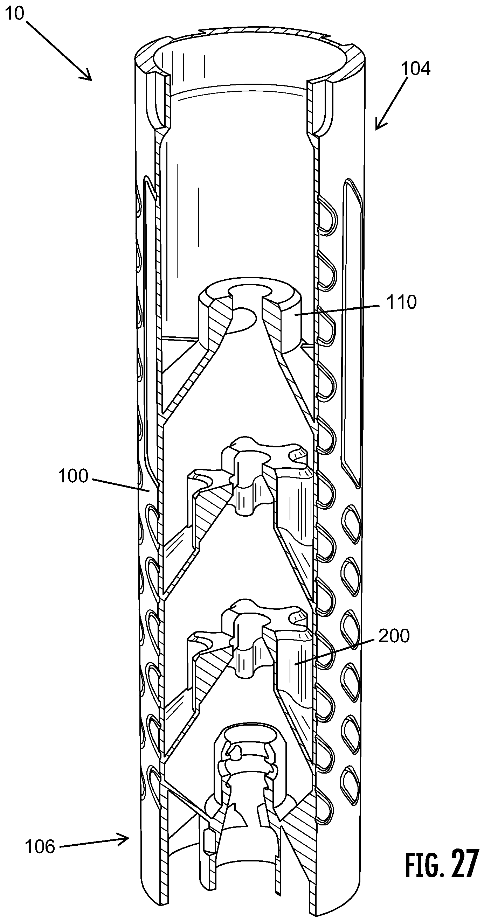

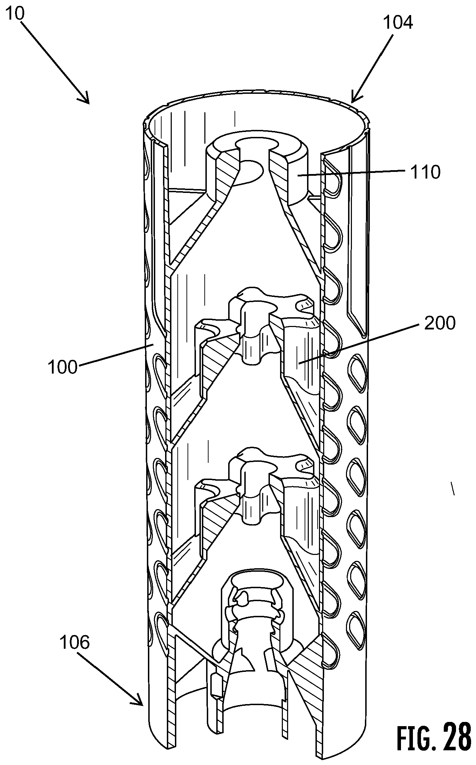

FIGS. 27-30 illustrate various embodiments of the firearm suppressor 10 of FIGS. 1-26, having varying lengths and number of baffles.

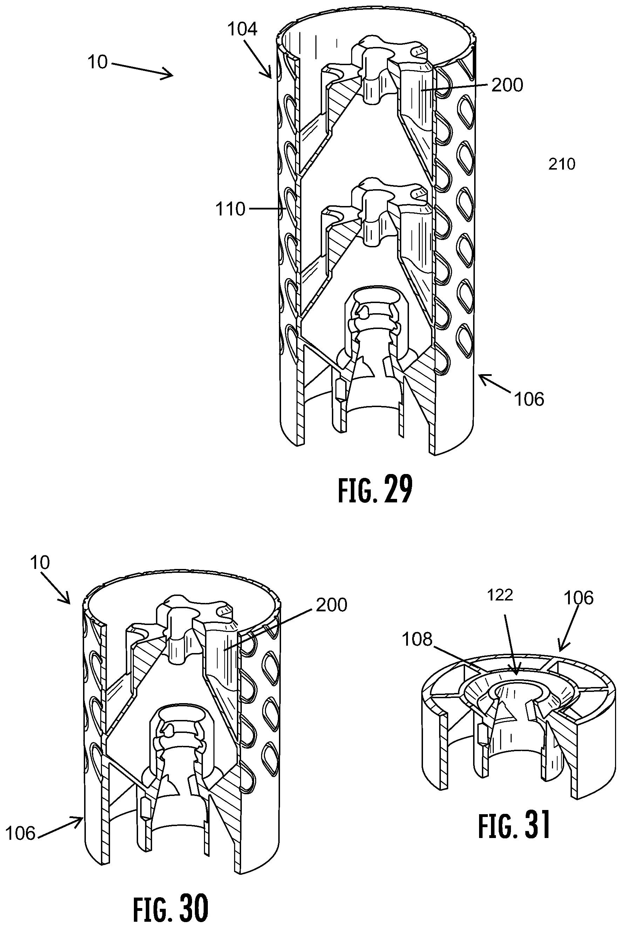

FIG. 31 illustrates an alternate embodiment of a second end of the firearm suppressor 10 of FIG. 1. While the second end 106 includes one or more struts 108 similar to the previously described embodiment, this end has an additional concave surface 122.

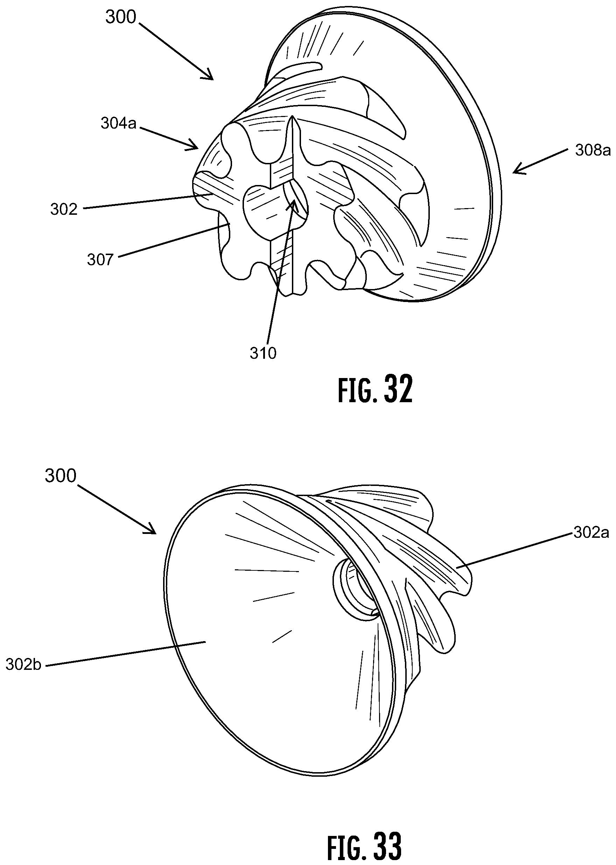

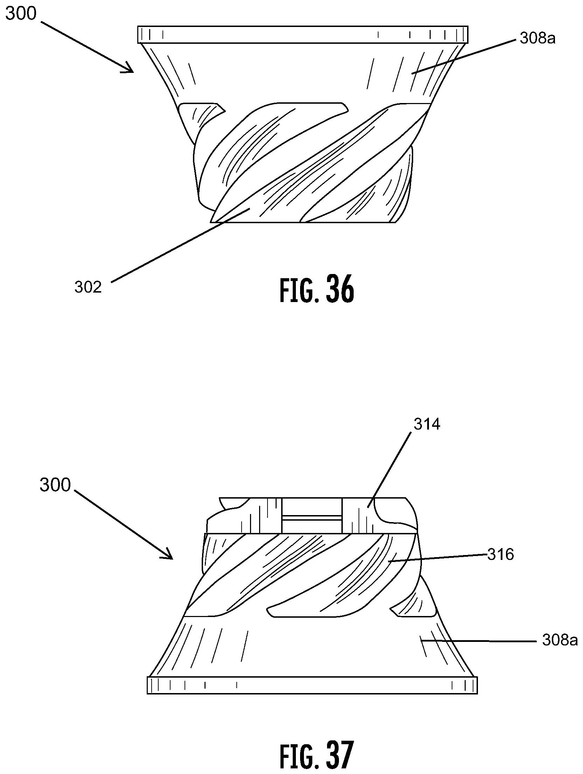

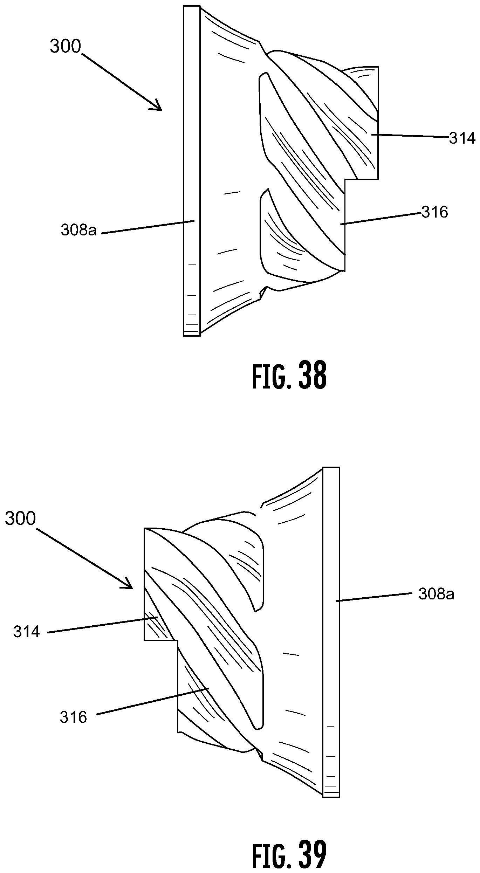

Referring to FIGS. 32-39, a second embodiment 20 of a 3D printed baffle 300 is illustrated. For purposes of clarity and ease of understanding, only the differences between this embodiment and the embodiment illustrated in FIGS. 1-31 will be discussed.

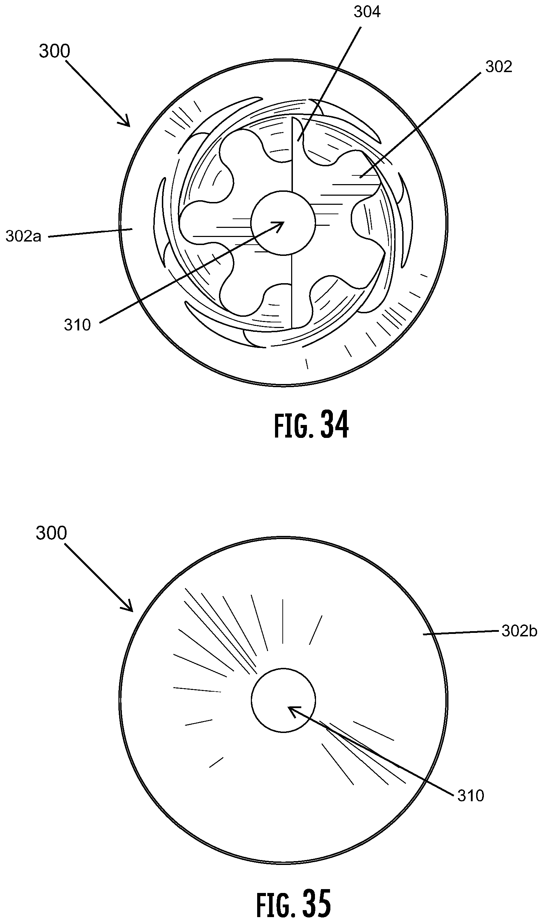

The second embodiment 20 includes one or more baffles 300 similar to the baffles discussed above, but rather than six (6) arms, the present embodiment includes five, fully rounded arms 302, and two half-arms 304. Naturally, other numbers of said arms 302 and half-arms 304 are equivalent to the exact arrangement illustrated, with a preference for between three and seven arms 302, and between one and three half-arms 304. The half-arms 304 differ from the fully rounded arms 302 in that the cross-section of the half-arms 304, considered in a first plane extending perpendicular to the longitudinal axis of the suppressor 10, is cut such that that, instead of having a fully-rounded shape, the shape is truncated such that its edge follows a second plane perpendicular to said first plane, leaving an abruptly cutaway form. It should also be noted that "half-arm" should not be taken to imply that this second plane bisects said fully-rounded form exactly, since as can be seen on figure 34, the half-arms 304 may have different thicknesses of material considered in said first plane.

The alternate embodiment baffle 300 includes a top surface 302a that faces the firearm and the first end 104 of the firearm suppressor 10, typically extending substantially perpendicular to the longitudinal axis of the firearm suppressor 10. The top surface 302a includes a first portion 304a with the arms 302, 304 fixedly coupled to a second portion 308a, which is generally conical - have a convex surface that faces the first end 104 of the firearm suppressor 10. However, unlike the prior baffles 200, the arms and valleys 307 of these baffles 300 twist clockwise around the second portion 308a, although an anticlockwise twist is clearly equivalent thereto. Additionally, the bottom surface 302b of the twisted baffle 300 includes only a cone having a concave surface that faces the second end 106 of the firearm suppressor 10, with a central bore 310 extending between the top surface 302a and the bottom surface 302b.

Nevertheless, as seen with the curved-sided hexagram baffle 200, the twisted arms 302, 304 of the twisted baffle 300 include a two-step, flat top surface 312 that faces the first end 104, the surface 312 having one step 314 higher or longer, i.e. closer to the first end 104, than the second step 316.

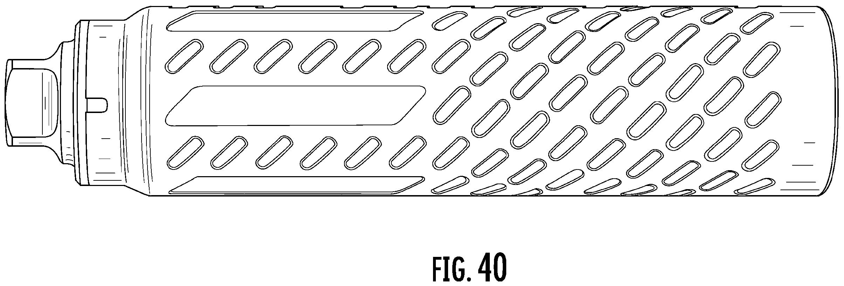

FIG. 40 is an exemplary design of the firearm suppressor of FIGS. 1-31 with an etched design that differentiates this firearm suppressor from other suppressors currently on the market.

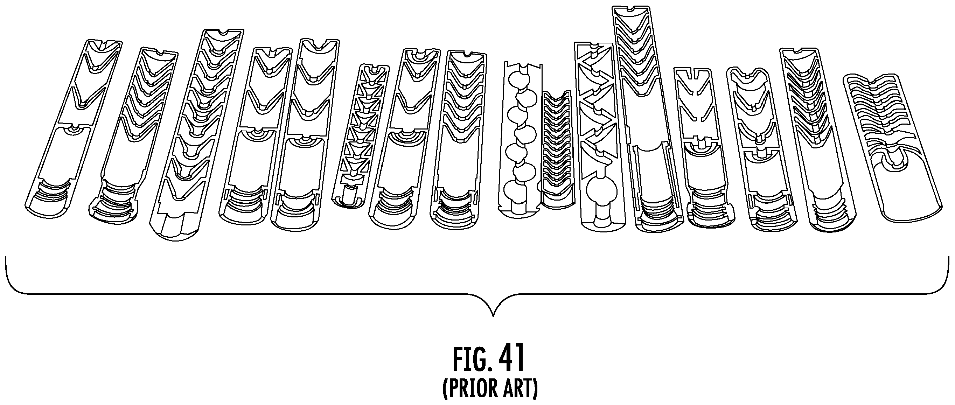

FIG. 41 illustrates sectional views of baffles used in firearm suppressor in the prior art. As shown in FIG. 41, the curved-sided hexagram baffle has never been developed by another manufacturer.

Particular embodiments and features have been described with reference to the drawings. It is to be understood that these descriptions are not limited to any single embodiment or any particular set of features, and that similar embodiments and features may arise or modifications and additions may be made without departing from the scope of these descriptions and the spirit of the appended claims.

## Claims

1. Firearm suppressor (10) comprising:
- a tube (100) having a first end (104) and a second end (106), said first end being adapted to be coupled to a firearm, preferably via a mounting system;
- one or more baffles (200) situated within said tube;
wherein one or more of said baffles (200) is a curved-sided hexagram baffle (200), comprising:
- a top surface (202a) including a first portion (204a) having six rounded arms or projections (206a) fixedly coupled to a generally conical second portion (208a), said top surface (202a) having a convex surface facing the first end (104);
- a bottom surface (202b) having a first portion (204b) having six rounded valleys (207) fixedly coupled to the generally conical second portion (208b), said bottom surface (202b) having a concave surface facing the second end (106);
- a two-step, flat-top surface (212) facing said first end (104), the flat-top surface (212) having one step (214) higher or longer than a second step (216), the bottom surface (202b) likewise having a concave, two-step surface (209) that mimics said flat-top surface (212).

2. Firearm suppressor (10) comprising:
- a tube (100) having a first end (104) and a second end (106), said first end being adapted to be coupled to a firearm, preferably via a mounting system;
- one or more baffles (300) situated within said tube;
wherein one or more of said baffles (300) comprises five fully-rounded arms (302) and two half-arms (304), said baffle (300) comprising:
- a top surface (302a) having a first portion (304a) with arms (302, 304) fixedly coupled to a generally conical second portion (308a), said top surface (302a) having a convex surface facing the first end (104), said arms (302, 304) defining valleys (307) therebetween , said arms (302, 304) and said valleys (307) being twisted clockwise around the second portion (308a);
- a bottom surface (302) comprising a cone having a concave surface facing the second end (106);
- a two-step flat-top surface (312) facing the first end (104), the flat-top surface (312) having one step (314) higher or longer than a second step (316).

3. Firearm suppressor (10) according to the preceding claim, wherein said bottom surface comprises only said cone having a concave surface facing the second end (106)

4. Firearm suppressor (10) according to any preceding claim, wherein said first end (104) includes one or more struts (108) or other additional structural pieces.

5. Firearm suppressor (10) according to the preceding claim, wherein said one or more struts (108) or other additional structural pieces are adapted to increase the rigidity of the suppressor (10) and strengthen it without adding too much additional weight.

6. Firearm suppressor (10) according to any preceding claim, wherein a cone-shaped blast baffle (110) is located proximate the first end (104) of the tube (100), said blast baffle (110) preferably creating a full circle at its aperture proximate the first end (104).

7. Firearm suppressor (10) according to the preceding claim, wherein said blast baffle (110) comprises a scallop (112), said scallop (112) being adapted to create a jet or circulation of gas adapted to cause a significant disruption in gas flow.

8. Firearm suppressor (10) according to the preceding claim, wherein said scallop (112) is formed as a notch or cutout on an edge of said baffle and adapted to help direct and control a flow of gases as they pass through said suppressor (10), and is preferably located on a downstream side of said blast baffle (110).

9. Firearm suppressor (10) according to any preceding claim, wherein said second end (106) includes one or more struts (108) arranged to provide rigidity and structure to the suppressor (10).

10. Firearm suppressor (10) according to any preceding claim, manufactured by 3D printing.
